(19) Europäisches Patentamt
European Patent Office
Office européen des brevets

(11) **EP 1 585 949 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(21) Anmeldenummer: **04702703.2**

(22) Anmeldetag: **16.01.2004**

(51) Int Cl.:
*G01H 1/00* (2006.01)    *G01M 13/00* (2006.01)
*G01N 22/02* (2006.01)    *G01S 13/88* (2006.01)
*F01D 21/00* (2006.01)

(86) Internationale Anmeldenummer:
**PCT/EP2004/000324**

(87) Internationale Veröffentlichungsnummer:
**WO 2004/065918 (05.08.2004 Gazette 2004/32)**

(54) **VERFAHREN ZUM ERMITTELN DER BEANSPRUCHUNG VON SCHAUFELN EINER STRÖMUNGSMASCHINE WÄHREND DES BETRIEBS SOWIE ENTSPRECHENDE VORRICHTUNG ZUR DURCHFÜHRUNG DES VERFAHRENS**

METHOD FOR DETERMINATION OF THE STRESS ON BLADES OF A TURBOMACHINE DURING OPERATION AND CORRESPONDING DEVICE FOR CARRYING OUT SAID METHOD

PROCEDE PERMETTANT DE DETERMINER LES CONTRAINTES APPLIQUEES AUX AUBES D'UNE TURBOMACHINE EN COURS DE FONCTIONNEMENT ET DISPOSITIF CORRESPONDANT POUR LA MISE EN OEUVRE DUDIT PROCEDE

(84) Benannte Vertragsstaaten:
**CH DE ES FR GB IT LI**

(30) Priorität: **23.01.2003 DE 10302714**
**03.12.2003 DE 10356513**

(43) Veröffentlichungstag der Anmeldung:
**19.10.2005 Patentblatt 2005/42**

(73) Patentinhaber: **SIEMENS AKTIENGESELLSCHAFT**
**80333 München (DE)**

(72) Erfinder:
• **BOSSELMANN, Thomas**
**91080 Marloffstein (DE)**
• **EIERMANN, Franz**
**96199 Zapfendorf (DE)**
• **HUBER, Klaus**
**91090 Effeltrich (DE)**
• **WILLSCH, Michael**
**90762 Füth (DE)**

(56) Entgegenhaltungen:
**EP-A- 0 558 843**    **EP-A- 0 806 680**
**WO-A-98/39670**    **GB-A- 2 011 752**
**US-A- 4 507 658**

EP 1 585 949 B1

**Beschreibung**

Die vorliegende Erfindung betrifft Verfahren zum Ermitteln der Beanspruchung von in einer Strömungsmaschine mit an einer in einem Gehäuse drehbar gelagerten Rotorwelle angeordneten Laufschaufeln. Ferner betrifft die Erfindung ein Verfahren zum Ermitteln der Beanspruchung von in einer Strömungsmaschine mit einem Gehäuse drehfest angeordneten Leitschaufeln, sowie eine Vorrichtung zur Durchführung der Verfahren.

Strömungsmaschinen, wie beispielsweise Dampf- oder Gasturbinen, werden als Wärme-Kraft-Maschinen in der Technik eingesetzt, um eine in einem Gasstrom gespeicherte Energie in eine mechanische Energie zu überführen, insbesondere eine Drehbewegung.

Um gerade bei Gasturbinen einen möglichst großen Gesamtwirkungsgrad hinsichtlich der Energieausnutzung zu erreichen, werden die Gaseintrittstemperaturen von der Brennkammer in den Strömungskanal der Gasturbine möglichst hoch gewählt. Im Stand der Technik liegen solche Gaseintrittstemperaturen beispielsweise bei 1200°C.

Damit die in dem Strömungskanal der Turbine angeordneten Schaufeln der physikalischen, insbesondere thermischen, Beanspruchung standhalten, ist es im Stand der Technik bekannt, die Schaufeln mit einer Oberflächenbeschichtung, Termal-Barrier-Coating, kurz TBC, zu versehen. Eine derartige Beschichtung der Schaufeln unterliegt jedoch der Alterung, indem diese mit der Zeit von der Schaufel in Abhängigkeit der Betriebsdauer abgetragen wird. Eine Schaufel, bei der die Oberflächenbeschichtung beschädigt ist, unterliegt einem sehr hohen Verschleiß,-der zur Zerstörung der Schaufel führt. Eine Leistungsverminderung oder sogar eine Beschädigung der Turbine ist die Folge.

Im Stand der Technik ist es daher üblich, aufgrund von Testergebnissen und Erfahrungswerten die Standzeiten solcher Schaufeln festzulegen, wobei am Ende eines solchen Betriebsintervalls jeweils die Turbine zerlegt wird, um die Oberflächenbeschichtung der Laufschaufeln zu überprüfen. Nachteilig ist, dass ein Zerlegen der Turbine sehr kosten- und zeitaufwendig ist, wobei die Wartungsintervalle derart gelegt sind, dass ein Auftreten der oben genannten Beschädigungen weitgehend vermieden wird. Dies führt ferner dazu, dass eine Wartung auch dann ausgeführt wird, wenn eine tatsächliche Verschleißgrenze noch nicht erreicht ist.

Darüber hinaus sind im Betrieb die Belastungen auf die Laufschaufeln, die durch die Drehbewegung und durch den auf die Laufschaufeln wirkenden Gasstrom hervorgerufen werden, sehr hoch. Auch die Belastungen, die nur auf den die Leitschaufeln umströmenden Gasstrom zurückzuführen sind, sind nicht zu vernachlässigen.

Im Betrieb geraten Lauf- und Leitschaufeln stets in mechanische Schwingungen. Sind die Schwingungen zu sehr ausgeprägt, kann es zu Rissbildung an den Schaufeln kommen, was im Extremfall zum Abreißen der Schaufeln führen kann. Insbesondere können abgerissene Laufschaufelteile wegen ihrer hohen kinetischen Energie Metallwände durchschlagen, wie z.B. die Gehäusewand der Turbine. Neben der Beschädigung der Turbine birgt dies auch eine Gefahr für die in der Nähe befindlichen Menschen.

Eine Überwachung der Schaufelschwingungen während des Betriebes ermöglicht, wenn es erforderlich ist, schnell zu reagieren und den Ursachen der Schwingung rechtzeitig entgegenzuwirken.

Eine Möglichkeit zur Überwachung von Turbinenschaufelschwingungen lässt sich gemäß WO 95/35484 mit Hilfe von Mikrowellen ausführen. Dabei wird ein Mikrowellenleiterrohr in die Nähe einer rotierenden Schaufelreihe einer Turbine positioniert und zwar so, dass bei der Drehung der Rotorwelle die Schaufelspitzen die Öffnung des Wellenleiterrohres passieren. Durch das Wellenleiterrohr wird dann eine kontinuierliche Welle von Mikrowellenenergie zur rotierenden Schaufelreihe gesendet. Beim Durchgang einer Schaufelspitze durch die Bahn der kontinuierlichen Welle wird eine reflektierte Welle erzeugt, die zusammen mit der gesendeten Welle eine stehende Welle ausbildet. Diese bricht zusammen, sobald die Schaufelspitze weiterläuft und baut sich erst wieder auf, wenn die darauffolgende Schaufelspitze vor der Öffnung erscheint. Jeder Durchgang einer einzelnen Schaufelspitze durch die Bahn der kontinuierlichen Welle erzeugt ein Signal im Takt der an der Öffnung vorbeilaufenden Schaufelspitzen. Abweichungen in der Regelmäßigkeit des Taktes liefern Informationen über den Schwingungszustand der Schaufel. In einer weiteren Ausführungsform wird die Intensität der reflektierten Welle gemessen, die sich ebenfalls im Takt der vorbeilaufenden Schaufelspitzen ändert. Die Signalauswertung geschieht dabei analog zu der vorstehend beschriebenen Ausführungsform. Mit dieser bekannten Vorrichtung ist es jedoch nur eingeschränkt möglich, Informationen über den Schwingungszustand zu erhalten. Da die ausgesandte Welle an den Schaufelspitzen reflektiert wird, werden nur Schwingungsmoden detektiert, die an den Schaufelenden besonders ausgeprägt sind. Moden mit besonderer Ausprägung im Bereich zwischen Rotorwelle und Schaufelspitze können mit dieser Vorrichtung nicht erfasst werden. Insbesondere bei einer speziellen Ausführungsform von Schaufelrädern, bei der alle Schaufelspitzen eines Rades mit einem Ring miteinander verbunden sind, lässt sich diese offenbarte Vorrichtung zur Schaufelschwingungsüberwachung nicht einsetzen. Denn bei diesen Schaufelrädern kommen nur Schwingungsmoden vor, bei denen der Bereich zwischen Rotorwelle und Schaufelspitze schwingt, während die Schaufelspitzen selbst durch den Ring fixiert sind und nicht schwingen können. Des Weiteren ist es mit dieser offenbarten Vorrichtung prinzipiell nicht möglich, Schwingungen der Leitschaufeln zu messen.

Es ist daher die Aufgabe der vorliegenden Erfindung, ein Verfahren und eine Vorrichtung zur Durchführung des Verfahrens bereitzustellen, mit dem eine umfassendere Überwachung des Zustandes der Lauf- und/oder Leitschaufeln im Hinblick auf Beanspruchungen während des Betriebs erreichbar ist.

Als Lösung der Aufgabe wird mit der Erfindung ein Verfahren zum Ermitteln der Beanspruchung von in einer Strömungsmaschine mit an einer in einem Gehäuse drehbar gelagerten Rotorwelle angeordneten Laufschaufeln vorgeschlagen, wobei durch Mittel zum Erzeugen mindestens einer elektromagnetischen Welle mindestens eine elektromagnetische Welle im Strömungskanal in einem Bereich der Laufschaufeln ausgesendet wird, die mindestens eine elektromagnetische Welle von wenigstens einer Laufschaufel zumindest teilweise reflektiert, der reflektierte Teil der mindestens einen elektromagnetischen Welle durch Mittel zum Empfang empfangen und aus einem der empfangenen mindestens einen elektromagnetischen Welle entsprechenden Signal die Beanspruchung der Laufschaufeln ermittelt wird.

Es wird der Effekt ausgenutzt, dass der reflektierte Anteil der mindestens einen elektromagnetischen Welle Informationen über den Beanspruchungszustand oder den Grad oder das Maß der Beeinträchtigung der Schaufeln gegenüber dem Sollzustand enthält, die durch Auswertung des empfangenen Signals ermittelt werden können. Als Parameter kommen hierzu insbesondere Amplitude und/oder Phase und/oder die spektrale Verteilung des Signals in Frage.

Es wird mit der Erfindung weiterhin ein Verfahren zum Ermitteln der Beanspruchung von in einer Strömungsmaschine mit einem Gehäuse drehfest angeordneten Leitschaufeln vorgeschlagen, wobei durch Mittel zum Erzeugen mindestens einer elektromagnetischen Welle mindestens eine elektromagnetische Welle in einem Strömungskanal in einem Bereich der Leitschaufeln ausgesendet wird, die mindestens eine elektromagnetische Welle von wenigstens einer Leitschaufel zumindest teilweise reflektiert, der reflektierte Teil der mindestens einen elektromagnetischen Welle durch Mittel zum Empfang empfangen und aus einem der mindestens einen empfangenen elektromagnetischen Welle entsprechenden Signal die Beanspruchung der Leitschaufeln ermittelt wird.

Darüber hinaus wird eine Kombination beider vorstehender Verfahren vorgeschlagen, um die Beanspruchung von Lauf- und Leitschaufeln gleichzeitig oder getrennt zu bestimmen.

Mit der Erfindung wird weiter ein Verfahren vorgeschlagen, als Maß für die Beanspruchung die Oberflächengüte der Schaufeln zu ermitteln. Erstmals ist es somit möglich, einen entsprechenden Zustand von Schaufeln nicht nur ohne Zerlegung der Turbine festzustellen, sondern auch während des Betriebs der Turbine-zu überwachen. So kann eine Wartung einer Turbine vorteilhafterweise dann erfolgen, wenn durch die Beanspruchung definitiv eine Verschleißgrenze bezüglich der Oberflächengüte erreicht ist. Die Wartungsintervalle können so auf die tatsächlichen Erfordernisse ausgedehnt werden. Die durch die Wartung der Turbine verursachten Kosten, insbesondere auch die Standzeiten, können deutlich reduziert werden. Zur Ausführung des Verfahrens können auch mehrere elektromagnetische Wellen ausgesendet werden, die beispielsweise auch über den Umfang des Strömungskanals verteilt ausgesendet werden können. Ebenso können natürlich die reflektierten Anteile an unterschiedlichen Stellen des Umfangs des Strömungskanals empfangen werden, um hierdurch zusätzliche und/oder genauere Informationen über den Zustand der Oberflächengüte zu erhalten. Selbstverständlich kann das Verfahren natürlich auch dual zum Ermitteln einer Oberflächengüte von in einer Strömungsmaschine angeordneten Leitschaufeln verwendet werden, wobei jedoch die Mittel zum Erzeugen mindestens einer elektromagnetischen Welle und zum Empfang an der drehbar gelagerten Rotorwelle angeordnet sind.

Vorteilhaft können somit auch nicht rotierende Elemente der Strömungsmaschine hinsichtlich ihrer Oberflächengüte überwacht werden. Es können beispielsweise über den Umfang der Strömungsmaschine verteilt angeordnete Mittel zum Aussenden mindestens einer elektromagnetischen Welle verwendet werden, wobei eine Anordnung bedarfsgerecht vorgesehen sein kann. Entsprechend können Mittel zum Empfang vorgesehen sein, um reflektierte elektromagnetische Wellen zu empfangen. Um Aufwand für den Betrieb einer solchen Anordnung zu reduzieren, kann beispielsweise vorgesehen sein, die Anordnung im Pulsbetrieb und/oder im Zeitmultiplex-Betrieb zu betreiben. Daneben kann auch vorgesehen sein, dass ein Mittel zum Aussenden mindestens einer elektromagnetischen Welle gleichzeitig auch für den Empfang verwendet wird, wobei dieses im Bereich der zu überwachenden Leitschaufeln am Gehäuse angeordnet ist.

Ferner wird vorgeschlagen, dass entsprechend einer zu ermittelnden Oberflächenstruktur mindestens eine an die jeweilige Oberflächenform angepasste elektromagnetische Welle mit einer angepassten Wellenlänge verwendet wird. So kann vorteilhaft erreicht werden, dass die Auswirkungen der Beschädigungen auf die mindestens eine elektromagnetische Welle besonders günstig sind, um beispielsweise für die Auswerteeinheit einen hohen Signalpegel zu erreichen, aus dem die Oberflächengüte ermittelt wird.

In einer weiteren Ausgestaltung wird vorgeschlagen, dass das Mittel zum Erzeugen mindestens einer elektromagnetischen Welle für den Empfang mindestens einer elektromagnetischen Welle verwendet wird. Bauteile sowie Montage- und Konstruktionsaufwand an der Turbine können reduziert werden. So kann beispielsweise eine Antenne sowohl zum Senden als auch für den Empfang verwendet werden.

Weiterhin wird vorgeschlagen, dass aus einer Intensität der mindestens einen empfangenen elektromagnetischen Welle die Oberflächengüte ermittelt wird. So kann vorteilhaft mit einfachen und kostengünstigen Mitteln eine Auswertung des Signals erreicht werden. Daneben können auch andere geeignete Wellenlängen verwendet werden, beispielsweise Millimeterwellen und dergleichen.

Mit der Erfindung wird außerdem ein Verfahren vorgeschlagen, als Maß für die Beanspruchung den Schwingungszustand der Schaufeln zu ermitteln. Es ist damit möglich, neben den Schwingungszuständen, die die Schaufelspitzen vibrieren lassen, auch Schwingungszustände festzustellen, deren Moden besonders in dem mittleren Bereich der Schaufel, also zwischen Schaufelspitze und Rotorwelle, ausgeprägt sind. Dies hat den Vorteil, dass die Informationen über den Schwingungszustand der Schaufeln umfassender und genauer als beim Stand der Technik sind. Schäden, die auf Moden zurückzuführen sind, die besonders in dem mittleren Bereich der Schaufeln ausgeprägt sind, können durch rechtzeitiges Eingreifen vermieden werden.

Zur Ausführung des Verfahrens können auch mehrere elektromagnetische Wellen ausgesendet werden, die beispielsweise auch über den Umfang des Strömungskanals verteilt ausgesendet werden können. Ebenso können natürlich die reflektierten Anteile an unterschiedlichen Stellen des Umfangs des Strömungskanals empfangen werden, um hierdurch zusätzliche und genauere Informationen über den Schwingungszustand der Laufschaufeln zu erhalten. Selbstverständlich kann das Verfahren natürlich auch dual zum Ermitteln eines Schwingungszustandes von in einer Strömungsmaschine angeordneten Leitschaufeln verwendet werden, wobei die Mittel zum Erzeugen mindestens einer elektromagnetischen Welle und zum Empfang auch an der drehbar gelagerten Rotorwelle angeordnet sein können.

Es wird mit der Erfindung weiterhin ein Verfahren zum Ermitteln des Schwingungszustandes von in einer Strömungsmaschine mit einem Gehäuse drehfest angeordneten Leitschaufeln vorgeschlagen, wobei durch Mittel zum Erzeugen mindestens einer elektromagnetischen Welle mindestens eine elektromagnetische Welle in einem Strömungskanal in einem Bereich der Leitschaufeln ausgesendet wird, die mindestens eine elektromagnetische Welle von wenigstens einer Leitschaufel zumindest teilweise reflektiert, der reflektierte Teil der mindestens einen elektromagnetischen Welle durch Mittel zum Empfang empfangen und aus einem der mindestens einen empfangenen elektromagnetischen Welle entsprechenden Signal der Schwingungszustand der Leitschaufeln ermittelt wird.

Darüber hinaus wird eine Kombination beider vorstehender Verfahren zur Ermittlung des Schwingungszustandes vorgeschlagen, um den Schwingungszustand von Lauf- und Leitschaufeln gleichzeitig oder getrennt zu bestimmen.

Vorteilhaft können somit auch nicht rotierende Elemente der Strömungsmaschine hinsichtlich ihres Schwingungszustandes überwacht werden. Es können beispielsweise über den Umfang der Strömungsmaschine verteilt angeordnete Mittel zum Aussenden mindestens einer elektromagnetischen Welle verwendet werden, wobei eine Anordnung bedarfsgerecht vorgesehen sein kann. Entsprechend können Mittel zum Empfang vorgesehen sein, um reflektierte elektromagnetische Wellen zu empfangen. Um Aufwand für den Betrieb einer solchen Anordnung zu reduzieren, kann beispielsweise vorgesehen sein, die Anordnung im Pulsbetrieb und/oder im Zeitmultiplex-Betrieb zu betreiben. Daneben kann auch vorgesehen sein, dass ein Mittel zum Aussenden mindestens einer elektromagnetischen Welle gleichzeitig auch für den Empfang verwendet wird, wobei dieses im Bereich der zu überwachenden Leitschaufeln am Gehäuse angeordnet ist.

Ferner wird vorgeschlagen, dass eine an die jeweilige Oberflächenform angepasste mindestens eine elektromagnetische Welle mit einer angepassten Wellenlänge verwendet wird. So kann vorteilhaft erreicht werden, dass die Auswirkungen der Schwingungen auf die mindestens eine elektromagnetische Welle besonders günstig sind, um beispielsweise für die Auswerteeinheit einen hohen Signalpegel zu erreichen, aus dem der Schwingungszustand ermittelt wird.

Darüber hinaus wird vorgeschlagen, dass als mindestens eine elektromagnetische Welle mindestens eine Radarwelle verwendet wird. Vorteilhaft kann auf bekannte Mittel zum Erzeugen und zum Übertragen von Radarwellen zurückgegriffen werden. Aufwand sowie Kosten können weiter reduziert werden. Ferner kann durch die Verwendung von Radarwellen eine Anpassung hinsichtlich der Schwingungsfrequenz und/oder der Beschädigung der Schaufeln erreicht werden, so dass ein günstiger Signalpegel zur Überwachung des Schwingungszustandes und/oder der Oberflächengüte erreicht werden kann.

In einer weiteren Ausgestaltung wird vorgeschlagen, dass das Mittel zum Erzeugen mindestens einer elektromagnetischen Welle für den Empfang mindestens einer elektromagnetischen Welle verwendet wird. Bauteile sowie Montage- und Konstruktionsaufwand an der Turbine können reduziert werden. So kann beispielsweise eine Radarantenne sowohl zum Senden als auch für den Empfang verwendet werden.

Weiterhin wird vorgeschlagen, dass aus einem Frequenzvergleich der mindestens einen ausgesandten mit der mindestens einen empfangenen elektromagnetischen Welle der Schwingungszustand der Schaufeln ermittelt wird. So kann vorteilhaft mit einfachen und kostengünstigen Mitteln eine Auswertung des Signals erreicht werden. Daneben können auch andere geeignete Wellenlängen verwendet werden, beispielsweise Millimeterwellen und dergleichen.

Darüber hinaus wird vorgeschlagen, dass als Maß für die Beanspruchung die Oberflächengüte und der Schwingungszustand der Schaufeln gleichzeitig ermittelt wird. Neben der Zeit- und Kostenersparnis liefert eine gleichzeitige Messung auch einen umfassenderen Überblick über die Beanspruchung der Schaufeln, was ein rascheres Eingreifen bei sich abzeichnender Beschädigung ermöglicht.

Mit der Erfindung wird ferner eine Vorrichtung zur Durchführung der erfindungsgemäßen Verfahren vorgeschlagen, welche Mittel zum Erzeugen einer elektrischen Schwingung, Mittel zur Erzeugung mindestens einer elektro- magnetische Welle aus der Schwingung, Mittel zum Empfang mindestens einer elektromagnetischen Welle und eine Auswerteeinheit zur Auswertung eines der mindestens einen empfangbaren elektromagnetischen Welle entsprechenden Signals aufweist. Vorteilhaft sind die Mittel zur Erzeugung mindestens einer elektromagnetischen Welle und zum Empfang in einem Strömungskanal der Strömungsmaschine angeordnet. Diese können jeweils durch Antennen gebildet sein, die geeignet sind, die elektromagnetischen Wellen zu erzeugen und auszusenden bzw. zu empfangen und ein entsprechendes Signal zu erzeugen. Das Mittel zum Erzeugen einer elektrischen Schwingung kann beispielsweise durch einen elektronischen Oszillator gebildet sein, der mit der Antenne zur Erzeugung mindestens einer elektromagnetischen Welle in Wirkverbindung steht. Das Mittel zum Empfang mindestens einer elektromagnetischen Welle steht vorzugsweise mit einer Auswerteeinheit in Wirkverbindung, die in der Lage ist, aus dem vom Mittel zum Empfang gelieferten Signal eine Information über den Schwingungszustand und/oder die Oberflächengüte der Schaufeln zu ermitteln.

Weiterhin wird vorgeschlagen, dass das Mittel zur Erzeugung mindestens einer elektromagnetischen Welle sowohl zum Senden als auch zum Empfang mindestens einer elektromagnetischen Welle geeignet ist. Die Anzahl der Bauelemente kann auf diese Weise weiter reduziert werden. So kann beispielsweise das Mittel zur Erzeugung mindestens einer elektromagnetischen Welle über ein Kopplungsmittel mit dem Mittel zum Erzeugen einer Schwingung in Wirkverbindung stehen. Ein der mindestens einen empfangenen elektromagnetischen Welle entsprechendes Signal wird über das Kopplungsmittel der Auswerteeinheit zugeführt. Es können auch mehrere Kopplungsmittel und Antennen vorgesehen sein, die beispielsweise parallel mit mehreren zugeordneten Auswerteeinheiten oder auch mit beispielsweise einer Auswerteeinheit im Zeitmultiplex in Verbindung stehen.

In einer vorteilhaften Weiterbildung der vorliegenden Erfindung wird vorgeschlagen, dass das Mittel zur Erzeugung mindestens einer elektromagnetischen Welle mindestens eine Radarantenne ist. Die Radarantenne kann kompakt gebaut sein und kleine Abmessungen aufweisen. Die Radarantenne ist sowohl zum Aussenden mindestens einer Radarwelle als auch zum Empfang mindestens einer Radarwelle geeignet. Dazu kann sie beispielsweise mit einem Zirkulator in Verbindung stehen, über den eine Schwingung zur Antenne zuführbar ist, wobei zugleich ein von der Radarantenne geliefertes Empfangssignal an eine Auswerteeinheit übermittelbar ist. Besonders vorteilhaft kann ein Verfahren nach dem Doppler-Prinzip eingesetzt werden, bei dem die Empfangswellenlänge von den Sendewellenlänge abweicht. Durch geeignete, insbesondere elektronische Mittel kann ein gleichzeitiger Betrieb des Aussendens und des Empfangens von elektromagnetischen Wellen erreicht werden. Darüber hinaus kann auch ein Wellenimpuls ausgesendet werden, wobei in den Impulspausen das Mittel zum Erzeugen mindestens einer elektromagnetischen Welle auf Empfang geschaltet wird. Energie und Aufwand zur Erzeugung der mindestens einen elektromagnetischen Welle kann eingespart werden.

In einer weiteren Ausgestaltung wird vorgeschlagen, dass das Mittel zur Erzeugung mindestens einer elektromagnetischen Welle in der Strömungsmaschine, insbesondere einer Gasturbine, angeordnet ist. Gerade im Großmaschinenbereich kann mit der erfindungsgemäßen Vorrichtung eine kostengünstige Überwachung der Schaufeln erreicht werden, wodurch insbesondere teure Stillstandzeiten wegen Wartung und Reparaturmaßnahmen weiter reduziert werden können. So kann beispielsweise eine Erhöhung der Verfügbarkeit einer mit einer Gasturbine ausgerüsteten Energieversorgung erreicht werden. Die erfindungsgemäße Vorrichtung kann darüber hinaus derart ausgestaltet sein, dass die Auswirkungen auf die Gasströmung im Strömungskanal der Strömungsmaschine weitgehend gering gehalten werden.

Weitere Vorteile und Merkmale sind der folgenden Figurenbeschreibung zu entnehmen. Gleiche Bauteile sind in unterschiedlichen Figuren mit gleichen Bezugszeichen versehen. Hinsichtlich der Funktionen gleicher Bauteile wird auf die Beschreibung zum ersten Ausführungsbeispiel verwiesen.

Es zeigen:

Figur 1    eine Gasturbine des Stands der Technik in einer teilweise aufgeschnittenen, perspektivischen Ansicht,

Figur 2    eine vergrößerte Ansicht eines Ausschnitts aus der Zeichnung in Figur 1 mit einer erfindungsgemäßen Vorrichtung,

Figur 3    ein Prinzipschaltbild zur Ausführung des erfindungsgemäßen Verfahrens,

Figur 4    eine Laufschaufel der Gasturbine in Figur 1,

Figur 5    eine Leitschaufel der Gasturbine in Figur 1,

Figur 6    ein Prinzipschaltbild einer weiteren Ausgestaltung zur Überwachung von Leitschaufeln und

Figur 7    Antennen-Anordnung zur Überwachung von Laufschaufeln.

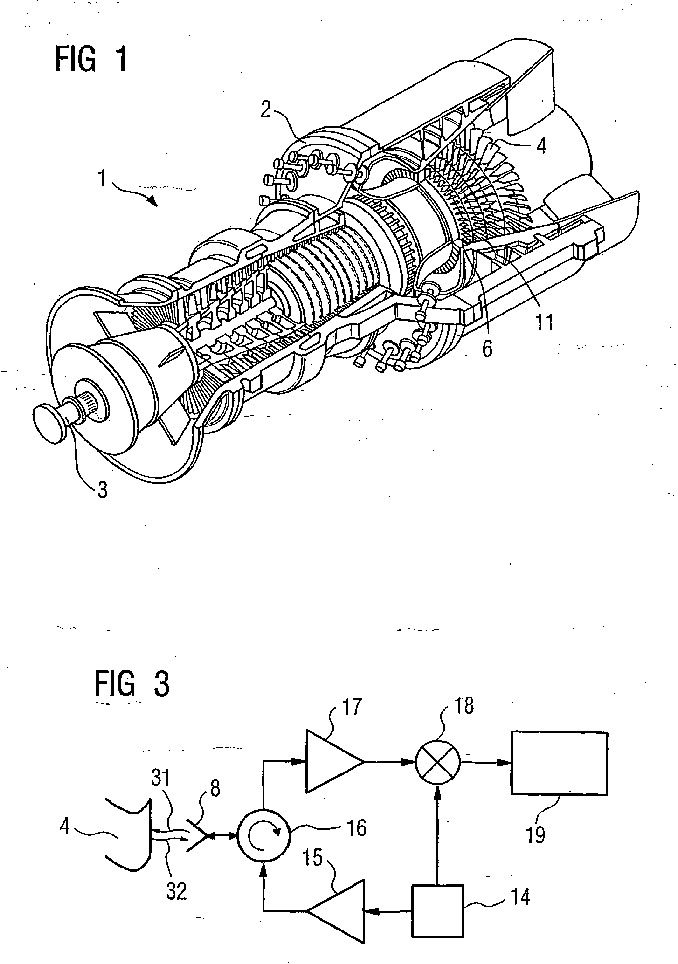

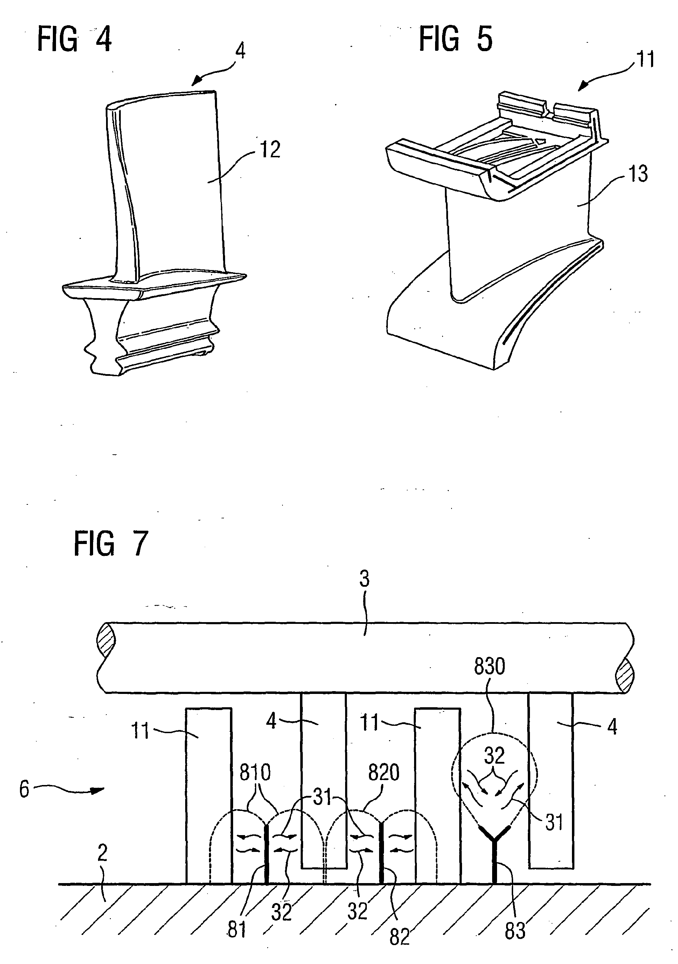

In Figur 1 ist eine Gasturbine 1 des Standes der Technik dargestellt, die für eine hohe Gaseintrittstemperatur von ca. 1200°C konzipiert ist. Die Gasturbine 1 weist an einer in einem Gehäuse 2 drehbar gelagerten Rotorwelle 3 angeordnete Laufschaufeln 4 auf. Ferner sind mit dem Gehäuse 2 drehfest verbundene Leitschaufeln 11 vorgesehen (Figur 4, Figur 5). Die Laufschaufeln 4 und die Leitschaufeln 11 sind insbesondere jeweils mit einer Oberflächenbeschichtung 12, 13 versehen, um den physikalischen Beanspruchungen im Strömungskanal 6 der Gasturbine 1 Stand zu halten.

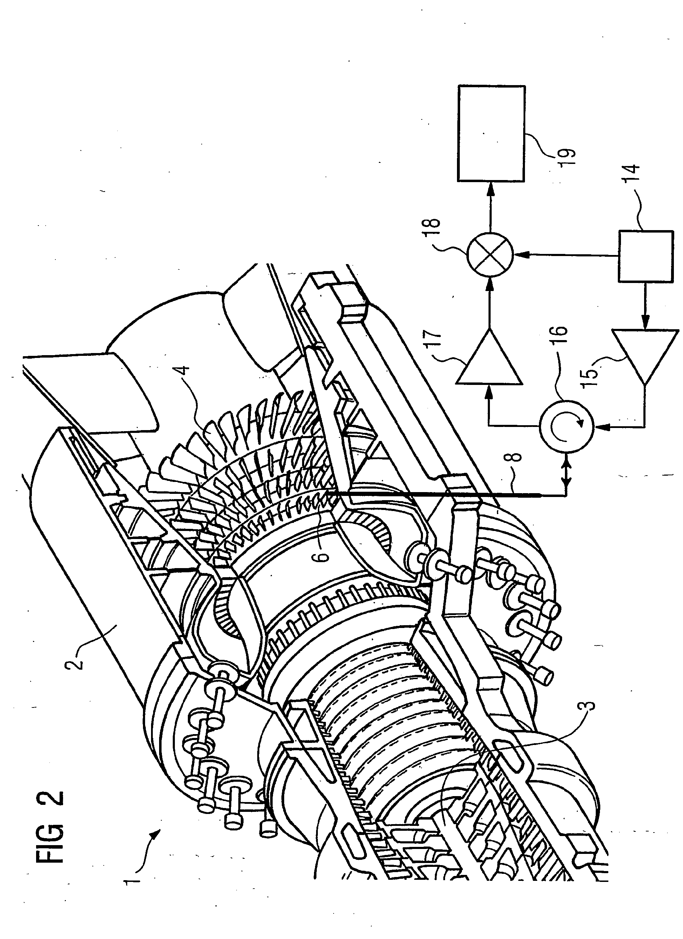

Wie in Figur 2 dargestellt, ist die Turbine 1 mit einer erfindungsgemäßen Vorrichtung ausgestattet, welche eine Antenne 8, insbesondere eine Radarantenne, aufweist, die in den Strömungskanal 6 der Gasturbine 1 hineinragt. Die Radarantenne 8 ist im Bereich der zu überwachenden Laufschaufeln 4 insbesondere zwischen zwei Laufschaufelreihen angeordnet. Die Radarantenne 8 dient als Mittel zum Aussenden mindestens einer elektromagnetischen Welle sowie auch als Mittel zum Empfang der mindestens einen elektromagnetischen Welle. Die Radarantenne 8 steht in Kommunikationsverbindung mit einem Zirkulator 16. Die erfindungsgemäße Vorrichtung weist ferner einen Hochfrequenzgenerator 14 auf, der über einen Verstärker 15 mit dem Zirkulator 16 in Wirkverbindung steht. Der Zirkulator 16 steht zugleich mit einem Empfangsverstärker 17 und mit einem Mischer 18 in Verbindung, der seinerseits zugleich mit dem Hochfrequenzgenerator 14 verbunden ist. Ein Ausgang des Mischers 18 ist mit der Auswerteeinheit 19 gekoppelt (Figur 2).

Im in den Figuren 2 und 3 gezeigten Ausführungsbeispielen wird das Prinzip eines Dopplerradars verwendet. Hierbei wird mindestens eine elektromagnetische (Radar-)Welle 31 mit einer festen Wellenlänge ausgesendet, die von einem relativ zur Antenne 8 bewegten, zu überwachenden Objekt (= Laufschaufel 4) reflektiert wird. Durch die Relativbewegung ist die Empfangswellenlänge im reflektierten Teil 32 der mindestens einen elektromagnetischen Welle gegenüber der ausgesendeten Wellenlänge gemäß den bekannten physikalischen Effekten verschoben und die Antenne 8 erzeugt ein entsprechendes Signal.

Im einzelnen läuft das Verfahren des hier behandelten Ausführungsbeispiels wie in Figur 3 gezeigt und im folgenden beschrieben ab.

Ein elektronischer Hochfrequenzgenerator 14 erzeugt eine Hochfrequenz mit einer festen, vorgebbaren Wellenlänge, welche vorzugsweise einer der in Tabelle 1 angegebenen Frequenzen $f_0$ entspricht.

Tabelle 1

| $f_0$ / GHz | 2.4 | 5.8 | 24 | 61 | 122 | 245 |
|---|---|---|---|---|---|---|
| $f_D$ / kHz | 6.032 | 14.577 | 60.32 | 153.3 | 306.6 | 459.9 |

Die Hochfrequenz wird einem Verstärker 15 zugeführt, der seinerseits die verstärkte Hochfrequenz über den Zirkulator 16 der Antenne 8 zuführt. Die Antenne 8 erzeugt aus der zugeführten Hochfrequenzenergie mindestens eine entsprechende Radarwelle 31 und sendet diese gemäß ihrer Strahlungscharakteristik aus. Die an der Radarantenne 8 vorbeilaufenden Laufschaufeln 4 reflektieren einen Teil 32 der Radarstrahlung zurück zur Antenne 8, wobei sie aufgrund ihrer Relativbewegung zur Antenne 8, zusammengesetzt aus Drehbewegung und Schwingung, eine Wellenlängenänderung bewirken. In der hier dargestellten Ausgestaltung mit einer Rotationsfrequenz von 60 Hz und mit einem wirksamen Abstand von ca. 1 m zwischen der Drehachse und dem durch die mindestens eine Radarwelle 31 erfassten Bereich der Laufschaufel 4, ergeben sich die zur Wellenlängenänderung entsprechenden Frequenzen $f_D$ gemäß der Formel:

$$f_D(t) = f_0 \cdot \frac{2v(t)}{c_o} \qquad .$$

Dabei ist $f_o$ die Frequenz der mindestens einen ausgesandten Welle 31, $v(t)$ die relativen Geschwindigkeiten der die mindestens eine elektromagnetischen Welle 31 reflektierenden Oberflächen der Laufschaufeln 4 und Leitschaufeln 11 bezüglich der Antenne 8 und $c_o$ die Ausbreitungsgeschwindigkeit der mindestens einen elektromagnetischen Welle 31, 32.

Die mindestens eine reflektierte elektromagnetische Welle 32 wird über die Antenne 8 wieder in ein elektrisches Signal transformiert, welches dem Zirkulator 16 zugeführt wird. Der Zirkulator 16 trennt nun das empfangene Signal vom gesendeten Signal und führt dies dem Empfangsverstärker 17 zu. Vom Empfangsverstärker 17 gelangt das Signal auf einen Mischer 18, in dem es mit einem Signal, welches der Hochfrequenz des Hochfrequenzgenerators 14 entspricht gemischt wird. Dabei werden die Phasenlagen der Hochfrequenz vom Hochfrequenzgenerator 14 und des Signals vom Empfangsverstärker 17 entsprechend berücksichtigt. Das Ausgangssignal des Mischers 18 liefert ein Signal mit der Differenzfrequenz zwischen Empfangsfrequenz und ausgesendeter Hochfrequenz. Dieses Signal mit der Frequenz $f_D$, wie in Tabelle 1 ausgeführt, wird der Auswerteeinheit 19 zugeführt, die aus den Eigenschaften dieses Signals (= Amplitude und/oder Phase und/oder deren spektrale Verteilung) den Schwingungszustand und/oder den Zustand der Oberflächengüte der entsprechenden Laufschaufeln 4 ermittelt. Das ermittelte Auswerteergebnis wird über nicht näher dargestellte Anzeigeeinheiten bzw. Meldeeinheiten an die überwachende Stelle gemeldet bzw. an eine Zentrale weitergeleitet. Die Auswerteeinheit kann auch mit einer Vergleichsfunktion ausgestattet sein, mit der das Erreichen eines vorgebbaren Schwellwertes feststellbar ist. So kann beispielsweise bei Erreichen des Schwellwertes eine Meldung automatisch ausgegeben werden, dass eine Wartung der Turbine 1 durchzuführen ist. Vorzugsweise kann hierzu die Signalintensität verwendet werden.

Die Antenne 8 ist derart ausgebildet und angeordnet, dass die mindestens eine reflektierte elektromagnetische Welle 32 zumindest teilweise gegenüber der mindestens einen ausgesendeten elektromagnetische Welle 31 eine Dopplerverschiebung (= Frequenzverschiebung) aufweist. In Figur 7 sind beispielhafte Ausführungsformen und Anordnungen verschiedener Antennen 81, 82 und 83 mit jeweils zugehöriger Strahlungscharakteristik 810, 820 bzw. 830 dargestellt. Die Antennen 81, 82 und 83 sind im Strömungskanal 6 im Bereich der zu überwachenden Laufschaufeln 4 und/oder Leitschaufeln 11 zwischen den Schaufelreihen angeordnet. Geeignet ist eine Ausführung als Stab-Antenne oder als Koaxial-Antenne insbesondere als koaxial ausgeführte Dipolantenne. Andere Antennen-Formen sind jedoch ebenfalls denkbar. Die Strahlungscharakteristik kann symmetrisch, wie bei den Antennen 81 und 83, aber asymmetrisch, wie bei der Antenne 82, ausgebildet sein. Für die Ausbildung einer möglichst großen Dopplerverschiebung ist es günstig, wenn die bewegten Teile, hier also die Laufschaufeln 4, den durch die Strahlungscharakteristik 810, 820 oder 830 abgedeckten Raumbereich passieren. Eine Bewegung, bei der sich die Laufschaufel 4 - in ihrer Gesamtheit oder nur in bestimmten Bereichen ihrer Oberfläche (vgl. die in Figur 4 dargestellte, in mehrere Richtungen gebogene Kontur) - zunächst auf die betreffende Antenne 81, 82 oder 83 zu bewegt und dann wieder von ihr entfernt, ist diesbezüglich besonders vorteilhaft. Es ist aber auch möglich, mit dieser Anordnung die Dopplerverschiebung, hervorgerufen nur durch die Schwingung der relativ zu den Antennen 81, 82 oder 83 feststehenden Teile, hier also die Leitschaufeln 11, festzustellen. Die Dopplerverschiebung rührt in diesem Fall nur von der Schwingungsbewegung nicht aber von einer Relativbewegung durch die Drehbewegung her.

Grundsätzlich können die Antennen 81, 82 und 83 zusätzlich zu der in der hier beschriebenen aktiven Betriebsweise, d.h. mit gezieltem Aussenden mindestens einer elektromagnetischen Welle 31 zum Zwecke der Erfassung der Laufschaufeln 4 und/oder der Leitschaufeln 11, auch passiv betrieben werden. Im passiven Betrieb emittieren die Antennen 81, 82 und 83 keine Sendestrahlung, sondern empfangen nur elektromagnetische Strahlung, die im Strömungskanal 6, insbesondere auch aufgrund von Defekten an den Laufschaufeln 4 und/oder an den Leitschaufeln 11, vorhanden ist. Die Antennen 81, 82 und 83 sind dann also ausschließlich zum "Hören" bestimmt.

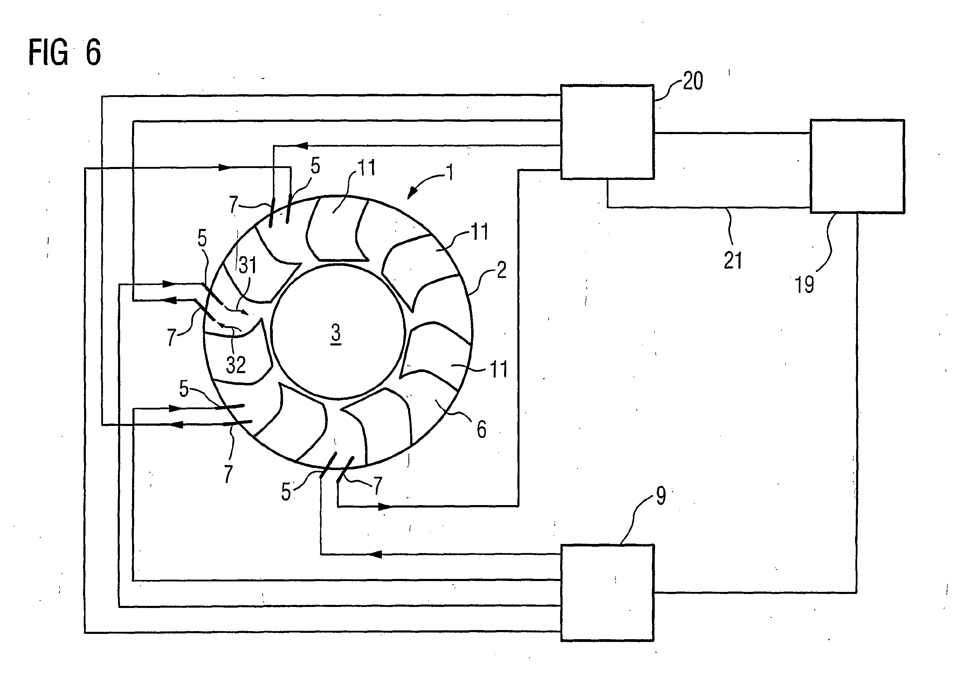

In einer weiteren Ausgestaltung der vorliegenden Erfindung werden die Leitschaufeln 11 und/oder die Laufschaufeln 4 einer Gasturbine 1 mittels Pulsradar überwacht. Ein Prinzipschaltbild einer solchen Ausgestaltung zur Erfassung der Leitschaufeln 11 zeigt Figur 6. Im Bereich der mit dem Gehäuse 2 drehfest verbundenen Leitschaufeln 11 der Gasturbine 1 sind über den Umfang des Strömungskanals 6 der Gasturbine 1 verteilt Sendeantennen 5 zur Aussendung mindestens einer elektromagnetischen Welle 31 angeordnet. Die Antennen 5 sind mit einem Hochfrequenzgenerator 9 verbunden, der jede Antenne mit Hochfrequenz versorgt. Der Hochfrequenzgenerator 9 ist ein Pulsgenerator, der kurze Hochfrequenzimpulse mit einem vorgebbaren Puls-Pausen-Verhältnis erzeugt und diese im Zeitmultiplex auf die mit ihm verbundenen Antennen 5 verteilt. Ferner sind über den Umfang des Strömungskanals 6 verteilt Empfangsantennen 7 zum Empfang von reflektierten elektromagnetischen Wellen 32 angeordnet. Die Empfangsantennen 7 sind mit einem Multiplexer 20 verbunden, der zugleich eine Funktion als Empfangsverstärker aufweist. In dieser Ausgestaltung wird über den Multiplexer 20 erreicht, dass zeitdiskret jeweils eine Antenne 7 mit der Auswerteeinheit 19 in Verbindung steht. Zugleich erhält die Auswerteeinheit 19 Hochfrequenz aus dem Hochfrequenzgenerator 9. Daneben erhält die Auswerteeinheit 19 über eine Leitung 21 ein Kanalauswahlsignal, welches eine Information über die ausgewählte Antenne 7 an die Auswerteeinheit 19 übermittelt. Die hier dargestellte Leitschaufelüberwachung wird im Impulsbetrieb betrieben, so dass der Energieverbrauch insgesamt gering gehalten werden kann. Darüber hinaus kann erreicht werden, dass die Bauelemente zur Erzeugung mindestens einer elektromagnetischen Welle insgesamt für eine geringere Belastung hinsichtlich der Thermik ausgelegt sein können.

Die vorliegende Erfindung ist nicht auf das Ausführungsbeispiel beschränkt anzusehen. Ebenso in den Schutzbereich hineingehörend ist, dass auch mehrere Radarantennen zum Aussenden und/oder für den Empfang vorgesehen sind, um beispielsweise eine Redundanz der Messung oder auch eine höhere Genauigkeit zu erreichen.

Darüber hinaus sieht die vorliegende Erfindung eine gleichzeitige Messung des Schwingungszustandes und der Oberflächengüte der genannten Schaufeln vor.

Die vorliegende Erfindung beschränkt sich nicht auf die Verwendung nur einer einzigen elektromagnetischen Welle 31, 32. Sie schließt selbstverständlich auch das Aussenden und Empfangen mehrerer elektromagnetischer Wellen oder von Wellenspektren ein.

**Patentansprüche**

1. Verfahren zum Ermitteln der Beanspruchung von in einer Strömungsmaschine (1) mit an einer in einem Gehäuse (2) drehbar gelagerten Rotorwelle (3) angeordneten Laufschaufeln (4), wobei durch zwischen Laufschaufelreihen angeordneten Mittel (5, 8, 81, 82, 83) zum Erzeugen mindestens einer elektromagnetischen Welle mindestens eine elektromagnetische Welle (31) in einem Strömungskanal (6) in einem Bereich der Laufschaufeln (4) zwischen den Laufschaufelreihen ausgesendet wird, die mindestens eine elektromagnetische Welle (31) von wenigstens einer Laufschaufel (4) zumindest teilweise reflektiert, der reflektierte Teil (32) der mindestens einen elektromagnetischen Welle durch zwischen den Laufschaufelreihen angeordneten Mittel (7, 8, 81, 82, 83) zum Empfang empfangen und aus einem der empfangenen mindestens einen elektromagnetischen Welle entsprechenden Signal die Beanspruchung der Laufschaufeln (4) ermittelt wird.

2. Verfahren zum Ermitteln der Beanspruchung von in einer Strömungsmaschine (1) mit einem Gehäuse (2) drehfest angeordneten Leitschaufeln (11), wobei durch zwischen Leitschaufelreihen angeordneten Mittel (5, 8, 81, 82, 83) zum Erzeugen mindestens einer elektromagnetischen Welle mindestens eine elektromagnetische Welle (31) in einem Strömungskanal (6) in einem Bereich der Leitschaufeln (11) zwischen den Leitschaufelreihen ausgesendet wird, die mindestens eine elektromagnetische Welle (31) von wenigstens einer Leitschaufel (11) zumindest teilweise reflektiert, der reflektierte Teil (32) der mindestens einen elektromagnetischen Welle durch zwischen den Leitschaufelreihen angeordneten Mittel (7, 8, 81, 82, 83) zum Empfang empfangen und aus einem der empfangenen mindestens einen elektromagnetischen Welle entsprechenden Signal die Beanspruchung der Leitschaufeln (11) ermittelt wird.

3. Verfahren nach Anspruch 1 und 2, **dadurch gekennzeichnet, dass** an der mit Laufschaufeln (4) und Leitschaufeln (11) versehenen Rotorwelle (3) der Strömungsmaschine (1) sowohl die Beanspruchung der Laufschaufeln (4) als auch die Beanspruchung der Leitschaufeln (11) ermittelt wird, wobei
durch zwischen den Laufschaufelreihen und Leitschaufelreihen angeordneten Mittel (5, 8, 81, 82, 83) zum Erzeugen der mindestens einen elektromagnetischen Welle die mindestens eine elektromagnetische Welle (31) im Strömungskanal (6) im Bereich der Laufschaufeln (4) und der Leitschaufeln (11) zwischen den Laufschaufelreihen und Leitschaufelreihen ausgesendet wird und
der reflektierte Teil (32) der mindestens einen elektromagnetischen Welle durch zwischen den Laufschaufelreihen und Leitschaufelreihen angeordneten Mittel (7, 8, 81, 82, 83) zum Empfang empfangen wird.

4. Verfahren nach einem der Ansprüche 1 bis 3, **dadurch gekennzeichnet, dass** als Maß für die Beanspruchung die Oberflächengüte der Schaufeln ermittelt wird.

5. Verfahren nach Anspruch 4, **dadurch gekennzeichnet, dass** entsprechend einer zu ermittelnden Oberflächenstruktur mindestens eine an die jeweilige Oberflächenform angepasste elektromagnetische Welle (31) mit einer angepassten Wellenlänge verwendet wird.

6. Verfahren nach einem der Ansprüche 1 bis 5, **dadurch gekennzeichnet, dass** das Mittel (8) zum Erzeugen mindestens einer elektromagnetischen Welle für den Empfang mindestens einer elektromagnetischen Welle (32) verwendet wird.

7. Verfahren nach einem der Ansprüche 4 bis 6, **dadurch gekennzeichnet, dass** aus einer Intensität der mindestens einen empfangenen elektromagnetischen Welle (32) die Oberflächengüte der Schaufeln ermittelt wird.

8. Verfahren nach einem der Ansprüche 1 bis 3, **dadurch gekennzeichnet, dass** als Maß für die Beanspruchung der Schwingungszustand der Schaufeln ermittelt wird.

9. Verfahren nach Anspruch 8, **dadurch gekennzeichnet, dass** mindestens eine an die jeweilige Oberflächenform angepasste elektromagnetische Welle (31) mit einer angepassten Wellenlänge verwendet wird.

10. Verfahren nach Anspruch 1 bis 9, **dadurch gekennzeichnet, dass** als mindestens eine elektromagnetische Welle mindestens eine Radarwelle (31) verwendet wird.

11. Verfahren nach einem der Ansprüche 8 bis 10, **dadurch gekennzeichnet, dass** das Mittel (8) zum Erzeugen mindestens einer elektromagnetischen Welle für den Empfang mindestens einer elektromagnetischen Welle (32) verwendet wird.

12. Verfahren nach einem der Ansprüche 8 bis 11, **dadurch gekennzeichnet, dass** aus einem Frequenzvergleich der mindestens einen ausgesandten mit der mindestens einen empfangenen elektromagnetischen Welle (32) der Schwingungszustand der Schaufeln ermittelt wird.

**13.** Verfahrens nach einem der vorhergehenden Ansprüche, **dadurch gekennzeichnet, dass** als Maß für die Beanspruchung die Oberflächengüte und der Schwingungszustand der Schaufeln gleichzeitig ermittelt wird.

**14.** Strömungsmaschine (1) mit an einer in Gehäuse (2) drehbar gelagerten Rotorwelle (3) angeordneten Laufschaufeln (4), drehfest angeordneten Leitschaufeln (11) und einer Vorrichtung zur Durchführung des Verfahrens nach einem der vorhergehenden Ansprüche mit Mitteln (9) zum Erzeugen einer elektrischen Schwingung, zwischen den Laufschaufelreihen und/oder den Leitschaufelreihen angeordneten Mitteln (5, 8) zur Erzeugung mindestens einer elektromagnetischen Welle (31) aus der Schwingung, zwischen den Laufschaufelreihen und/oder den Leitschaufelreihen angeordneten Mitteln (7, 8) zum Empfang mindestens einer elektromagnetischen Welle (32) und mit einer Auswerteeinheit (10) zur Auswertung der mindestens einen empfangbaren elektromagnetischen Welle (32).

**15.** Strömungsmaschine nach Anspruch 14, **dadurch gekennzeichnet, dass** das Mittel (8) zur Erzeugung mindestens einer elektromagnetischen Welle sowohl zum Senden als auch zum Empfang mindestens einer elektromagnetischen Welle (31, 32) geeignet ist.

**16.** Strömungsmaschine nach Anspruch 14 oder 15, **dadurch gekennzeichnet, dass** das Mittel (5, 8) zur Erzeugung mindestens einer elektromagnetischen Welle (31) eine Radarantenne ist.

**17.** Strömungsmaschine nach einem der Ansprüche 14 bis 16, **dadurch gekennzeichnet, dass** das Mittel (5, 8) zur Erzeugung mindestens einer elektromagnetischen Welle (31) im Strömungskanal (6) der Strömungsmaschine (1), welche insbesondere eine Gasturbine ist, angeordnet ist.

**Claims**

**1.** Method for determination of the stress on a turbine machine (1) with turbine blades (4) arranged on a rotor shaft (3) mounted to rotate within a housing (2), whereby through means arranged between blade rows (5 ,8, 81, 82, 83) to generate at least one electromagnetic wave, at least one electromagnetic wave (31) is emitted in a turbine channel (6) in an area of the turbine blades (4) which at least partly reflects the at least one electromagnetic wave (31) from at least one turbine blade (4), the reflected part (32) of the at least one electromagnetic wave is received by receiving means arranged between the blade rows (7, 8, 81, 82, 83) and from a signal corresponding to the at least one electromagnetic wave received the stress on the turbine blades (4) is determined.

**2.** Method for determination of the stress on a turbine machine (1) with guide vanes (11) arranged for fixed rotation within a housing (2), whereby through means arranged between rows of guide vanes (5, 8, 81, 82, 83) to generate at least one electromagnetic wave, the at least one electromagnetic wave (31) is emitted in a turbine channel (6) in an area of the guide vanes (11) between the blade rows which at least partly reflects the at least one electromagnetic wave (31) from at least one guide vane (11), the reflected part (32) of the at least one electromagnetic wave is received by receiving means arranged between the blade rows (7, 8, 81, 82, 83) and from a signal corresponding to the at least one electromagnetic wave received the stress on the guide vanes (11) is determined.

**3.** Method in accordance with claim 1 and 2, **characterized in that**, on the rotor shaft (3) of the turbine machine (1) provided with turbine blades (4) and guide vanes (11) both the stress on the turbine blades (4) and also the stress on the guide vanes (11) is determined, whereby through means (5, 8, 81, 82, 83)arranged between the turbine blade rows and the guide vane rows to generate the at least one electromagnetic wave, the at least one electromagnetic wave (31) in the
turbine channel (6) in the area of the turbine blades (4) and the guide vanes (11) is emitted between the turbine blade rows and guide vane rows and
the reflected part (32) of the at least one electromagnetic wave is received by receive means (7, 8, 81, 82, 83) arranged between the turbine blade rows and the guide vane rows.

**4.** Method in accordance with one of the claims 1 to 3, **characterized in that** the surface quality of the blades is determined as a measure for the stress.

**5.** Method in accordance with claim 4, **characterized in that**, in accordance with a surface structure to be determined, at least one electromagnetic wave (31) matched to the relevant surface form with a matched wavelength is used.

**6.** Method in accordance with one of the claims 1 to 5, **characterized in that** the means (8) for generating at least one electromagnetic wave is used for receiving at least one electromagnetic wave (32).

7. Method in accordance with one of the claims 4 to 6, **characterized in that** the surface quality of the blades is determined from an intensity of the at least one received electromagnetic wave (32).

8. Method in accordance with one of the claims 1 to 3, **characterized in that** the vibration status of the blades is determined as a measure for the stress.

9. Method in accordance with claim 8, **characterized in that** at least one electromagnetic wave (31) matched to the relevant surface form is used with a matched wavelength.

10. Method in accordance with claim 1 to 9, **characterized in that** at least one radar wave (31) is used as at least one electromagnetic wave.

11. Method in accordance with one of the claims 8 to 10, **characterized in that** the means (8) for generating at least one electromagnetic wave is used for receiving at least one electromagnetic wave (32).

12. Method in accordance with one of the claims 8 to 11, **characterized in that** the vibration status of the blades is determined from a frequency comparison between the at least one emitted and the at least one received electromagnetic wave (32) .

13. Method in accordance with one of the previous claims, **characterized in that** the surface quality and the vibration status are simultaneously determined as a measure for the stress.

14. Turbine machine (1) with turbine blades (4) arranged on a rotor shaft (3) supported to allow rotation in housing (2), fixed-rotation guide vanes (11) and a device for executing the method in accordance with one of the previous claims with means (9) for generating an electrical vibration, means (5, 8) arranged between the turbine blade rows and/or the guide vane rows for generating at least one electromagnetic wave (31) from the vibration, means (7, 8) arranged between the turbine blade rows and/or the guide vane rows for receiving at least one electromagnetic wave (32) and with an evaluation unit (10) for evaluation of the at least one receivable electromagnetic wave (32).

15. Turbine machine in accordance with claim 14, **characterized in that** the means (8) for generating at least one electromagnetic wave is suitable both for sending and for receiving at least one electromagnetic wave (31, 32).

16. Turbine machine in accordance with claim 14 or 15, **characterized in that** the means (5, 8) for generating at least one electromagnetic wave (31) is a radar antenna.

17. Turbine machine in accordance with one of the claims 14 to 16, **characterized in that** the means (5, 8) for generating at least one electromagnetic wave (31) is arranged in the turbine channel (6) of the turbine machine (1), which is especially a a gas turbine.

**Revendications**

1. Procédé de détermination des contraintes appliquées aux aubes (4) mobiles disposées dans une turbomachine (1) ayant un arbre (3) de rotor monté tournant dans un carter (2) dans lequel on émet par des moyens (5, 8, 81, 82, 83) de production d'au moins une onde électromagnétique disposés entre des rangées d'aubes mobiles au moins une onde (31) électromagnétique dans un canal (6) d'écoulement dans une zone des aubes (4) mobiles comprise entre les rangées d'aubes mobiles, on réfléchit au moins en partie la au moins une onde (31) électromagnétique par au moins une aube (4) mobile, on reçoit la partie (32) réfléchie de la au moins une onde électromagnétique par des moyens (7, 8, 81, 82, 83) de réception disposés entre les rangées d'aubes mobiles et on détermine les contraintes appliquées aux aubes (4) mobiles à partir d'un signal correspondant à la au moins une onde électromagnétique reçue.

2. Procédé de détermination des contraintes appliquées à des aubes (11) directrices montées sans tourner sur un carter (2) dans une turbomachine (1) dans lequel on émet par des moyens (5, 8, 81, 82, 83) de production d'au moins une onde électromagnétique disposés entre des rangées d'aubes directrices au moins une onde (31) électromagnétique dans un canal (6) d'écoulement dans une zone des aubes (11) directrices comprise entre les rangées d'aubes directrices, on réfléchit au moins en partie la au moins une onde (31) électromagnétique par au moins une aube (11) directrice, on reçoit la partie (32) réfléchie de la au moins une onde électromagnétique par des moyens (7, 8, 81, 82, 83) de réception disposés entre les rangées d'aubes directrices et on détermine les contraintes appliquées aux aubes (11) directrices à partir d'un signal correspondant à la au moins une onde électromagnétique reçue.

**3.** Procédé suivant la revendication 1 et 2, **caractérisé en ce que** l'on détermine sur l'arbre (3) rotorique de la turbomachine munie des aubes (4) mobiles et des aubes (11) directrices tant les contraintes appliquées aux aubes (4) mobiles que les contraintes appliquées aux aubes (11) directrices, dans lequel on émet par des moyens (5, 8, 81, 82, 83) disposés entre les rangées d'aubes mobiles et les rangées d'aubes directrices et de production d'au moins une onde électromagnétique la au moins une onde (31) électromagnétique dans le canal (6) d'écoulement dans la zone des aubes (4) mobiles et des aubes (11) directrices entre les rangées d'aubes mobiles et les rangées d'aubes directrices, et
on reçoit la partie (32) réfléchie de la au moins une onde électromagnétique par des moyens (7, 8, 81, 82, 83) de réception disposés entre les rangées d'aubes mobiles et les rangées d'aubes directrices.

**4.** Procédé suivant l'une des revendications 1 à 3, **caractérisé en ce que** l'on détermine comme mesure des contraintes appliquées la qualité de surface des aubes.

**5.** Procédé suivant la revendication 4, **caractérisé en ce qu'**en fonction des structures de surface à déterminer on utilise au moins une onde (31) électromagnétique adaptée à la forme de surface respective et ayant une longueur d'onde adaptée.

**6.** Procédé suivant l'une des revendications 1 à 5, **caractérisé en ce que** l'on utilise le moyen (8) de production d'au moins une onde électromagnétique pour la réception d'au moins une onde (32) électromagnétique.

**7.** Procédé suivant l'une des revendications 4 à 6, **caractérisé en ce que** l'on détermine la qualité de surface des aubes à partir d'une intensité de la au moins une onde (32) électromagnétique reçue.

**8.** Procédé suivant l'une des revendications 1 à 3, **caractérisé en ce que** l'on détermine comme mesure des contraintes appliquées l'état d'oscillation des aubes.

**9.** Procédé suivant la revendication 8, **caractérisé en ce que** l'on utilise au moins une onde (31) électromagnétique adaptée à la forme respective de surface et ayant une longueur d'onde adaptée.

**10.** Procédé suivant la revendication 1 à 9, **caractérisé en ce que** l'on utilise au moins une onde (31) radar comme onde électromagnétique.

**11.** Procédé suivant l'une des revendications 8 à 10, **caractérisé en ce que** l'on utilise des moyens (8) de production d'au moins une onde électromagnétique pour la réception d'au moins une onde (32) électromagnétique.

**12.** Procédé suivant l'une des revendications 8 à 11, **caractérisé en ce que** l'on détermine l'état d'oscillation des aubes à partir d'une comparaison de fréquence entre la au moins une onde (32) électromagnétique émise et la au moins une onde (32) électromagnétique reçue.

**13.** Procédé suivant l'une des revendications précédentes, **caractérisé en ce que** l'on détermine simultanément la qualité de surface et l'état d'oscillation des aubes comme mesures des contraintes appliquées.

**14.** Turbomachine (1) comprenant des aubes (4) mobiles disposées sur un arbre (3) rotorique monté tournant dans un carter (2), des aubes (11) directrices disposées sans pouvoir tourner et un dispositif pour la mise en oeuvre du procédé suivant l'une des revendications précédentes comprenant des moyens de production d'une oscillation électrique, des moyens (5, 8) disposés entre les rangées d'aubes mobiles et/ou les rangées d'aubes directrices de production d'au moins une onde (31) électromagnétique à partir de l'oscillation, des moyens (7, 8) disposés entre les rangées d'aubes mobiles et/ou les rangées d'aubes directrices de réception d'au moins une onde (32) électromagnétique et une unité (10) d'exploitation de la au moins une onde (32) électromagnétique qui peut être reçue.

**15.** Turbomachine suivant la revendication 14, **caractérisée en ce que** le moyen (8) de production d'au moins une onde électromagnétique est approprié à la fois pour émettre et pour recevoir au moins une onde (31, 32) électromagnétique.

**16.** Turbomachine suivant la revendication 14 ou 15, **caractérisée en ce que** le moyen (5, 8) de production d'au moins une onde (31) électromagnétique est une antenne radar.

**17.** Turbomachine suivant l'une des revendications 14 à 16, **caractérisée en ce que** le moyen (5, 8) de production d'au moins une onde (31) électromagnétique est disposé dans le canal (6) d'écoulement de la turbomachine (1) qui est notamment une turbine à gaz.

FIG 1

2

1

4

11

6

3

FIG 3

17

18

31

8

4

16

19

32

15

14

FIG 2

FIG 4

FIG 5

FIG 7

FIG 6